# EUROPÄISCHE PATENTSCHRIFT

(11) **EP 2 253 004 B1**
(45) Veröffentlichungstag und Bekanntmachung des Hinweises auf die Patenterteilung: **20.08.2014**
(21) Anmeldenummer: 09709553.3
(22) Anmeldetag: 02.02.2009
(51) Int. Cl.: H01H 83/14, H02H 3/33

(54) **FEHLERSTROMSCHUTZSCHALTER**
FAULT CURRENT CIRCUIT BREAKER
DISJONCTEUR DIFFÉRENTIEL

(30) Priorität: 14.02.2008 AT 2422008
(43) Veröffentlichungstag der Anmeldung: 24.11.2010
(73) Patentinhaber: Eaton Industries (Austria) GmbH, 3943 Schrems (AT)
(72) Erfinder: DOBUSCH, Gerhard, A-1180 Wien (AT)
(74) Vertreter: Eaton IP Group EMEA
(86) Internationale Anmeldenummer: PCT/AT2009/000040
(87) Internationale Veröffentlichungsnummer: WO 2009/100470

(56) Entgegenhaltungen:
- EP-A- 0 665 623
- EP-A- 0 813 283
- JP-A- 11 339 629

## Beschreibung

Die Erfindung betrifft einen Fehlerstromschutzschalter gemäß dem Oberbegriff des Patentanspruches 1.

Fehlerstromschutzschalter müssen gemäß einschlägiger intermationaler, nationaler bzw. regionaler Vorschriften eine Prüfeinrichtung zur Prüfung der Funktionstauglichkeit der Fehlerstromauslösung aufweisen. Eine derartige Prüfeinrichtung umfasst in der Regel einen Prüfwiderstand und einen Prüftaster, wobei bei Betätigung des Prüftasters ein Prüfstromkreis geschlossen wird, und derart ein simulierter Fehlerstrom von einem Leiter zu einem anderen Leiter am Summenstromwandler vorbei erzeugt wird. Sofern der Fehlerstromschutzschalter ordnungsgemäß funktioniert, wird dieser ausgelöst und die Trennkontakte des Fehlerstromschutzschalters durchtrennen die Leiter eines zu schützenden Netzes. Bei derartigen besonders einfach ausgeführten Prüfeinrichtungen müsste der Prüfwiderstand die bei einem simulierten Fehlerstrom auftretenden Leistungen von etwa 30W thermisch bewältigen. Ein derartiger Widerstand wäre jedoch sehr groß und kostenintensiv, weshalb in der Regel ein sog. Hilfskontakt in dem Prüfstromkreis angeordnet ist, welcher bei einem Öffnen der Trennkontakte auch den Prüfstromkreis durchtrennt. Dadurch kann die thermische Belastung des Prüfwiderstandes gering gehalten werden, da der Prüfwiderstand die Leistung lediglich für den Zeitraum zwischen dem Betätigen des Prüftasters und dem Auslösen des Fehlerstromschutzschalters bewältigen muss. Allerdings ist das Vorsehen eines derartigen Hilfskontaktes im Prüfstromkreis und dessen Verbindung zu den Trennkontakten konstruktiv und fertigungstechnisch aufwendig, und erfordert in Form des Hilfsschalters einen weiteren kostenintensiven Bauteil.

Die JP 11 339629 A beschreibt einen Schutzschalter mit einem Prüfstromkreis, welcher eine Spannungsstabilisierungsschaltung mit einer Zenerdiode aufweist, gemäß dem Oberbegriff des Patentanspruchs 1.

Aufgabe der Erfindung ist es daher einen Fehlerstromschutzschalter der eingangs genannten Art anzugeben, mit welchem die genannten Nachteile vermieden werden können, und mit welchem - unter Verzicht auf einen Schaltkontakt in dem Prüfstromkreis - ein Prüfwiderstand geringer Baugröße eingesetzt werden kann, und welcher einen konstruktiv einfachen Aufbau aufweist.

Erfindungsgemäß wird dies durch die Merkmale des Patentanspruches 1 erreicht.

Dadurch kann bei einem Fehlerstromschutzschalter - unter Verzicht auf einen Schaltkontakt in dem Prüfstromkreis - ein Prüfwiderstand geringer Baugröße eingesetzt werden. Durch die nun - gegenüber dem bekannten Stand der Technik - deutlich erhöhte Windungszahl bzw. Anzahl der Windungen bzw. Wicklungen, mit welcher der Prüfstromkreis an den Summenstromwandler ankoppelt, kann der Prüfwiderstand deutlich hochohmiger als bisher gestaltet werden. Dadurch kann der Strom durch den Prüfwiderstand und somit auch die Leistungsaufnahme des Prüfwiderstandes gesenkt werden. Dadurch kann ein Prüfwiderstand verwendet werden, welcher eine noch geringere thermische Belastbarkeit aufweisen muss, und trotzdem für den Dauerbetrieb geeignet ist, wodurch auf einen konstruktiv und fertigungstechnisch aufwendigen Hilfskontakt zum Durchtrennen des Prüfstromkreises verzichtet werden kann. Thermisch weniger belastbare Widerstände weisen im Gegensatz zu thermisch höher belastbaren Widerständen deutlich verringerte Abmessungen auf. Dadurch kann der konstruktive und fertigungstechnische Aufwand zur Bildung eines Fehlerstromschutzschalters deutlich gesenkt werden. Durch den Verzicht auf einen Hilfskontakt, sowie die geringere notwendige thermische Belastbarkeit des Prüfwiderstandes können die Kosten für die Bildung eines Fehlerstromschutzschalters gesenkt werden. Durch die Verwendung der Tertiärwicklung als Teil des Prüfstromkreises können bereits in einem Fehlerstromschutzschalter vorhandene Baugruppen mehrfach eingesetzt werden, wodurch weiters Ressourcen gespart werden können.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die einzige beigeschlossene Zeichnung, in welcher lediglich eine bevorzugte Ausführungsform eines erfindungsgemäßen Fehlerstromschutzschalters als schematischer Stromlaufplan beispielhaft dargestellt sind, näher beschrieben.

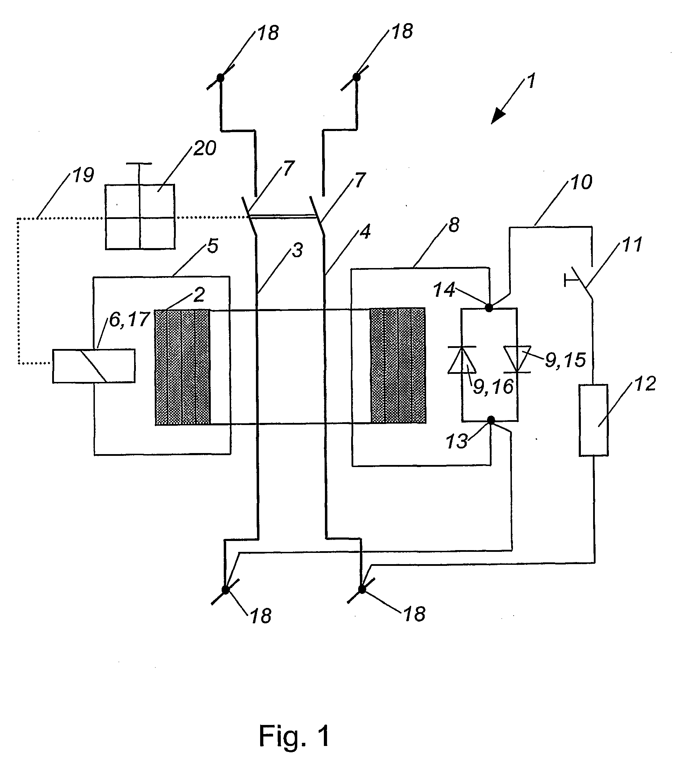

Die einzige Figur zeigt einen Fehlerstromschutzschalter 1 mit netzspannungsunabhängiger Fehlerstromauslösung, umfassend wenigstens einen Summenstromwandler 2 durch welchen wenigstens ein erster Leiter 3 und ein zweiter Leiter 4 eines zu schützenden Netzes geführt sind, wobei auf dem Summenstromwandler 2 wenigstens eine Sekundärwicklung 5 angeordnet ist, wobei die Sekundärwicklung 5 schaltungstechnisch mit einem Auslöser 6 verbunden ist, welcher über ein Schaltschloss 20 mit Trennkontakten 7 in dem wenigstens einen ersten Leiter 3 und dem wenigstens einen zweiten Leiter 4 wirkverbunden ist, wobei auf dem Summenstromwandler 2 weiters eine Tertiärwicklung 8 angeordnet ist, welche schaltungstechnisch mit wenigstens einem spannungsabhängigen Widerstand 9 verbunden ist, wobei die Tertiärwicklung 8 Teil eines Prüfstromkreises 10 umfassend einen Prüftaster 11 und einen Prüfwiderstand 12 ist.

Dadurch kann bei einem Fehlerstromschutzschalter 1- unter Verzicht auf einen Schaltkontakt in dem Prüfstromkreis 10 - ein Prüfwiderstand 12 geringer Baugröße eingesetzt werden. Durch die nun - gegenüber dem bekannten Stand der Technik - deutlich erhöhte Windungszahl bzw. Anzahl der Windungen bzw. Wicklungen, mit welcher der Prüfstromkreis 10 an den Summenstromwandler 2 ankoppelt, kann der Prüfwiderstand 12 deutlich hochohmiger als bisher gestaltet werden. Dadurch kann der Strom durch den Prüfwiderstand 12 und somit auch die Leistungsaufnahme des Prüfwiderstandes 12 gesenkt werden. Dadurch kann ein Prüfwiderstand 12 verwendet werden, welcher eine noch geringere thermische Belastbarkeit aufweisen muss, und trotzdem für den Dauerbetrieb geeignet ist, wodurch auf einen konstruktiv und fertigungstechnisch aufwendigen Hilfskontakt zum Durchtrennen des Prüfstromkreises 10 verzichtet werden kann. Thermisch weniger belastbare Widerstände weisen im Gegensatz zu thermisch höher belastbaren Widerständen deutlich verringerte Abmessungen auf. Dadurch kann der konstruktive und fertigungstechnische Aufwand zur Bildung eines Fehlerstromschutzschalters 1 deutlich gesenkt werden. Durch den Verzicht auf einen Hilfskontakt, sowie die geringere notwendige thermische Belastbarkeit des Prüfwiderstandes 12 können die Kosten für die Bildung eines Fehlerstromschutzschalters 1 gesenkt werden. Durch die Verwendung der Tertiärwicklung 8 als Teil des Prüfstromkreises 10 können bereits in einem Fehlerstromschutzschalter vorhandene Baugruppen mehrfach eingesetzt werden, wodurch weiters Ressourcen gespart werden können.

Als Prüfwiderstand 12 im Sinne der gegenständlichen Erfindung wird ein Widerstand bezeichnet, welcher im Wesentlichen als rein ohmscher Widerstand wirkt, bzw. wenigstens bei der Frequenz des zu schützenden Netzes als rein ohmscher Widerstand wirkt.

Die einzige Figur zeigt eine lediglich besonders bevorzugte Ausführungsform eines erfindungsgemäßen Fehlerstromschutzschalters 1 zur netzspannungsunabhängigen Fehlerstromauslösung als schematische Darstellung der funktionellen Baugruppen. Ein derartiger Fehlerstromschutzschalter 1 ist zum Schutz von Anlagen und Menschen vorgesehen, wobei im Falle eines auftretenden gefährlichen Fehlerstromes die an den Fehlerstromschutzschalter 1 angeschlossenen Verbraucher von einem Versorgungsnetz, umfassend den ersten Leiter 3 und den zweiten Leiter 4, getrennt werden. Der Fehlerstromschutzschalter weist Anschlussklemmen 18, insbesondere Schraubanschlussklemmen, zum Anschluss wenigstens eines ersten und eines zweiten Leiters 3, 4 eines elektrischen Versorgungsnetzes auf. Der dargestellte schematische Stromlaufplan zeigt eine Ausführungsform mit lediglich einem ersten und einem zweiten Leiter 3, 4. Es können jedoch Ausführungsformen mit jeder vorgebbaren Anzahl an Leitungen bzw. Leitern eines elektrischen Energieversorgungsnetzes vorgesehen sein, insbesondere Ausführungsformen mit drei oder vier Leitern, etwa zum Schutz eines an einem Drehstromnetz angeschlossenen Drehstromverbrauchers. Die weitere Beschreibung bezieht sich auf die dargestellte Ausführungsform mit einem ersten und einem zweiten Leiter 3, 4, wobei dies Ausführungsformen mit mehreren Leitern entsprechend äquivalent mit einschließt. In dem ersten und dem zweiten Leiter 3, 4 sind sog. Trennkontakte 7, daher Schaltkontakte, welche zum Auftrennen bzw. Unterbrechen des ersten bzw. zweiten Leiters, sowie zum anschließenden Schließen, vorgesehen bzw. ausgebildet sind, angeordnet. Die beschriebenen und in der Figur dargestellten Bauelemente bzw. Baugruppen sind zusammen in einem Isolierstoffgehäuse angeordnet, welches Durchbrechungen wenigstens für die Anschlussklemmen 18 und einen manuell betätigbaren Handschalthebel zum manuellen Öffnen bzw. Schließen der Trennkontakte 7 aufweist. Weiters kann vorgesehen sein, dass ein erfindungsgemäßer Fehlerstromschutzschalter 1 weitere - nicht dargestellte bzw. beschriebene - Baugruppen bzw. Bauteile umfasst, etwa eine Schaltstellungsanzeige, eine Auslöseanzeige und dergleichen.

Ein erfindungsgemäßer Fehlerstromschutzschalter 1 weist - in an sich bekannter Weise - wenigstens einen Summenstromwandler 2 mit einem Wandlerkern, umfassend einen Magnetwerkstoff, auf, durch welchen der erste und zweite Leiter 3, 4 als Primärwicklung geführt sind. Es kann vorgesehen sein, den ersten und den zweiten Leiter 3, 4 lediglich durch eine im Wesentlichen zentrale Öffnung des Summenstromwandlers 2 zu führen, oder diese um den Wandlerkern herum zu wickeln. Auf dem Summenstromwandler 2 ist weiters eine Sekundärwicklung 5 zur Detektion eines Fehlerstromsignals angeordnet, wobei die Sekundärwicklung 5 schaltungstechnisch mit einem Auslöser 6 verbunden ist, welcher bevorzugt als Permanentmagnetauslöser 17 ausgebildet ist, wodurch eine besonders sichere und schnelle Ansprache des Fehlerstromschutzschalters 1 erreicht werden kann. Der Auslöser 6 wirkt mechanisch über ein Schaltschloss 20 auf die Trennkontakte 7, was in der Figur durch eine punktierte Linie 19 dargestellt ist. Beim Auftreten eines gefährlichen Fehlerstromes, wird ein entsprechendes Fehlerstromsignal in der Sekundärwicklung 5 erzeugt, und der Auslöser 6 wirkt auf die Trennkontakte 7, welche geöffnet werden, und den ersten und zweiten Leiter 3, 4 durchtrennen.

Die in einem derartigen netzspannungsunabhängigen Fehlerstromschutzschalter 1 zur Detektion eines Fehlerstromes und Auslösung des Fehlerstromschutzschalters 1, daher Trennen der Trennkontakte 7 angeordneten Baugruppen beziehen deren zum Auslösen notwendige Energie vollständig aus dem Fehlerstrom bzw. dem zu diesem proportionalen Fehlerstromsignal in der Sekundärwicklung 5, und weisen daher keine aktiven elektronischen Bauteile, wie etwa Transistoren und/oder Operationsverstärker, und keine Netzteile zur Versorgung derartiger aktiver Bauelemente auf.

Fehlerstromschutzschalter 1 sollen Menschen und Anlagen vor den Wirkungen elektrischer Fehlerströme schützen, und in entsprechend gefährlichen Situationen Anlagen und Verbraucher von einem elektrischen Versorgungsnetz trennen, wobei unerwünschte Auslösungen aufgrund ungefährlicher, weil extrem kurzzeitig auftretender Fehlerströme weitestgehend vermieden werden sollen. Ein erfindungsgemäßer Fehlerstromschutzschalter 1 weist daher zusätzlich zu der Sekundärwicklung 5 zur Detektion von Fehlerströmen zum Auslösen des Fehlerstromschutzschalters 1 eine sog. Tertiärwicklung 8 bzw. Schutzwicklung auf dem Summenstromwandler 2 auf. Die Enden dieser Tertiärwicklung 8 sind an wenigstens einen spannungsabhängigen Widerstand 9 angeschlossen. Die Tertiärwicklung und der spannungsabhängige Widerstand 9 sind derart bemessen, dass der spannungsabhängige Widerstand 9 bei einer vorgebbaren Spannung durchschaltet, die Tertiärwicklung 8 dadurch mit geringem Widerstand leitend wird, und dem in der Sekundärwicklung 5 induzierten Fehlerstromsignal Energie entzogen wird. Dadurch können Fehlauslösungen aufgrund kurzzeitiger, für Menschen und Anlagen ungefährlicher Netzstörungen vermieden werden. Als spannungsabhängiger Widerstand 9, kann jeder spannungsabhängige Widerstand 9 vorgesehen sein, etwa ein Varistor. Besonders bevorzugt, und wie in der Figur dargestellt, ist vorgesehen, dass der spannungsabhängige Widerstand 9 als wenigsten eine Diode 15, 16 ausgebildet ist, wodurch eine besonders einfache und kostengünstige Ausbildung eines Fehlerstromschutzschalters 1 ermöglicht wird. Um den dargelegten Schutz vor Fehlauslösungen auch beim bevorzugten Einsatz eines Fehlerstromschutzschalters 1 bei den in Versorgungsnetzen üblichen Wechselströmen zu gewährleisten, ist besonders bevorzugt, und wie in der Figur dargestellt, vorgesehen, dass an die Tertiärwicklung 8 eine erste Diode 15 und eine zweite Diode 16 angeschlossen sind, wobei die erste Diode 15 parallel zu der zweiten Diode 16 geschaltet ist, und die erste Diode 15 zur zweiten Diode 16 gegenpolar angeordnet ist. Gegenpolar bedeutet in gegenständlichen Fall, dass die Durchflussrichtungen der beiden parallel geschalteten Dioden 15, 16 jeweils entgegengesetzt angeordnet sind. Erfindungsgemäß ist vorgesehen, dass die Tertiärwicklung 8 Teil eines Prüfstromkreises 10 umfassend einen Prüftaster 11 und einen Prüfwiderstand 12 ist, wobei jede Art der Anbindung der Tertiärwicklung 8 an den Prüfstromkreis 10, bzw. jede Art der Integrierung der Tertiärwicklung 8 in den Prüfstromkreis vorgesehen sein kann, mit welcher die dargelegten Vorteile und Wirkungen erzielt werden können.

Bei einer besonders bevorzugten und dargestellten Ausführungsform der gegenständlichen Erfindung ist vorgesehen, dass ein erstes Ende 13 der Tertiärwicklung 8 mit dem ersten Leiter 3 schaltungstechnisch verbunden ist, dass ein zweites Ende 14 der Tertiärwicklung 8 mit dem Prüftaster 11 schaltungstechnisch verbunden ist, dass der Prüftaster 11 schaltungstechnisch mit dem Prüfwiderstand 12 verbunden ist, und dass der Prüfwiderstand 12 schaltungstechnisch mit dem zweiten Leiter 4 verbunden ist. Der Begriff schaltungstechnisch Verbunden bezeichnet dabei eine elektrisch leitende Verbindung, vorzugsweise eine Schweiß-Löt-, Crimp- und/oder Klemmverbindung. Es kann vorgesehen sein, wie in der Figur dargestellt, dass die Verbindungen des Prüfstromkreises 10 mit dem ersten und zweiten elektrischen Leiter 3, 4 auf derselben Seite des Summenstromwandlers 2 angeordnet sind. Es kann aber auch vorgesehen sein, dass die Verbindungen des Prüfstromkreises 10 mit dem ersten und zweiten elektrischen Leiter 3, 4 auf unterschiedlichen Seiten des Summenstromwandlers 2 angeordnet sind.

## Patentansprüche

1. Fehlerstromschutzschalter (1) mit netzspannungsunabhängiger Fehlerstromauslösung, umfassend wenigstens einen Summenstromwandler (2) durch welchen wenigstens ein erster Leiter (3) und ein zweiter Leiter (4) eines zu schützenden Netzes geführt sind, wobei auf dem Summenstromwandler (2) wenigstens eine Sekundärwicklung (5) angeordnet ist, wobei die Sekundärwicklung (5) schaltungstechnisch mit einem Auslöser (6) verbunden ist, welcher über ein Schaltschloss (20) mit Trennkontakten (7) in dem wenigstens einen ersten Leiter (3) und dem wenigstens einen zweiten Leiter (4) wirkverbunden ist, **dadurch gekennzeichnet, dass** auf dem Summenstromwandler (2) weiters eine Tertiärwicklung (8) zur Vermeidung von Fehlauslösungen angeordnet ist, welche schaltungstechnisch mit wenigstens einem spannungsabhängigen Widerstand (9) verbunden ist, dass die Tertiäwicklung (8) und der spannungsabhängige Widerstand (9) derart bemessen sind, dass der spannungsabhängige Widerstand (9) bei einer vorgebbaren Spannung durchschaltet um einem in der Sekundärwicklung induzierten Fehlerstromsignal Energie zu entziehen, und dass die Tertiärwicklung (8) Teil eines Prüfstromkreises (10) umfassend einen Prüftaster (11) und einen Prüfwiderstand (12) ist.

2. Fehlerstromschutzschalter (1) nach Anspruch 1, **dadurch gekennzeichnet, dass** ein erstes Ende (13) der Tertiärwicklung (8) mit dem ersten Leiter (3) schaltungstechnisch verbunden ist, dass ein zweites Ende (14) der Tertiärwicklung (8) mit dem Prüftaster (11) schaltungstechnisch verbunden ist, dass der Prüftaster (11) schaltungstechnisch mit dem Prüfwiderstand (12) verbunden ist, und dass der Prüfwiderstand (12) schaltungstechnisch mit dem zweiten Leiter (4) verbunden ist.

3. Fehlerstromschutzschalter (1) nach Anspruch 1 oder 2, **dadurch gekennzeichnet, dass** der spannungsabhängige Widerstand (9) als wenigsten eine Diode (15, 16) ausgebildet ist.

4. Fehlerstromschutzschalter (1) nach einem der Ansprüche 1 bis 3, **dadurch gekennzeichnet, dass** an die Tertiärwicklung (8) eine erste Diode (15) und eine zweite Diode (16) angeschlossen sind, wobei die erste Diode (15) parallel zu der zweiten Diode (16) geschaltet ist, und die erste Diode (15) zur zweiten Diode (16) gegenpolar angeordnet ist.

5. Fehlerstromschutzschalter (1) nach einem der Ansprüche 1 bis 4, **Dadurch gekennzeichnet, dass** der Auslöser (6) als Permanentmagnetauslöser (17) ausgebildet ist.

## Claims

1. Residual-current circuit breaker (1) having a mains voltage-independent fault current breaking, comprising at least one total current converter (2) through which at least one first conductor (3) and a second conductor (4) of a network to be protected are guided, wherein at least one secondary winding (5) is provided on the total current converter (2), wherein the secondary winding (5) is connected in a circuit to a breaker (6) which is operatively connected via a switch lock (20) to break contacts (7) in the at least one first conductor (3) and the at least one second conductor (4), **characterised in that** a tertiary winding (8) to prevent false tripping is furthermore arranged on the total current converter (2), which tertiary winding is connected in a circuit to at least one voltage-dependent resistor (9), that the tertiary winding (8) and the voltage-dependent resistor (9) are rated in such a way that the voltage-dependent resistor (9) connects through at a settable voltage in order to remove energy from a residual current signal induced in the secondary winding, and that the tertiary winding (8) is part of a test current circuit (10) comprising a test button (11) and a test resistor (12).

2. Residual-current circuit breaker (1) according to claim 1, **characterised in that** a first end (13) of the tertiary winding (8) is connected in a circuit to the first conductor (3) and that a second end (14) of the tertiary winding (8) is connected in a circuit to the test button (11), that the test button (11) is connected in a circuit to the test resistor (12), and that the test resistor (12) is connected in a circuit to the second conductor (4).

3. Residual-current circuit breaker (1) according to claim 1 or 2, **characterised in that** the voltage-dependent resistor (9) is configured as at least one diode (15, 16).

4. Residual-current circuit breaker (1) according to one of claims 1 to 3, **characterised in that** a first diode (15) and a second diode (16) are connected to the tertiary winding (8), wherein the first diode (15) is switched parallel to the second diode (16), and the first diode (15) is arranged reversely polarised to the second diode (16).

5. Residual-current circuit breaker (1) according to one of claims 1 to 4, **characterized in that** the breaker (6) is configured as a permanent magnet breaker (17).

## Revendications

1. Disjoncteur différentiel (1) à déclenchement indépendant de la tension de réseau, comprenant au moins un transformateur sommateur de courant (2) à travers lequel passent au moins un premier conducteur (3) et second conducteur (4) d'un réseau qui doit être protégé, au moins un enroulement secondaire (5) étant agencé sur le transformateur sommateur de courant (2), l'enroulement secondaire (5) étant raccordé par circuit à un déclencheur (6) qui est raccordé de manière fonctionnelle, par l'intermédiaire d'un mécanisme de verrouillage (20), à des contacts de sectionnement (7) dans l'au moins un premier conducteur (3) et l'au moins un second conducteur (4), **caractérisé en ce qu'**un enroulement tertiaire (8) destiné à empêcher un déclenchement indésirable est en outre agencé sur le transformateur sommateur de courant (2), lequel enroulement tertiaire est raccordé par circuit à au moins une résistance (9) dépendant de la tension, **en ce que** l'enroulement tertiaire (8) et la résistance (9) dépendant de la tension sont classés de telle manière que la résistance (9) dépendant de la tension effectue une commutation, en présence d'une tension prédéfinissable, afin d'éliminer de l'énergie d'un signal de courant résiduel induit dans l'enroulement secondaire, et **en ce que** l'enroulement tertiaire (8) fait partie d'un circuit de contrôle (10) comprenant un bouton-poussoir de contrôle (11) et une résistance de contrôle (12).

2. Disjoncteur différentiel (1) selon la revendication 1, **caractérisé en ce qu'**une première extrémité (13) de l'enroulement tertiaire (8) est raccordée par circuit au premier conducteur (3) et **en ce qu'**une seconde extrémité (14) de l'enroulement tertiaire (8) est raccordée par circuit au bouton-poussoir de contrôle (11), **en ce que** le bouton-poussoir de contrôle (11) est raccordé par circuit à la résistance de contrôle (12) et **en ce que** la résistance de contrôle (12) est raccordée par circuit au second conducteur (4).

3. Disjoncteur différentiel (1) selon la revendication 1 ou 2, **caractérisé en ce que** la résistance (9) dépendant de la tension est configurée sous la forme d'au moins une diode (15, 16). 7a

4. Disjoncteur différentiel (1) selon l'une quelconque des revendications 1 à 3, **caractérisé en ce qu'**une première diode (15) et une seconde diode (16) sont raccordées à l'enroulement tertiaire (8), la première diode (15) étant connectée en parallèle à la seconde diode (16) et la première diode (15) étant agencée en polarisation inverse à la seconde diode (16).

5. Disjoncteur différentiel (1) selon l'une quelconque des revendications 1 à 4, **caractérisé en ce que** le déclencheur (6) est configuré sous la forme d'un déclencheur à aimant permanent (17).
